# EUROPEAN PATENT APPLICATION

(11) **EP 1 538 008 A1**
(43) Date of publication of application: **08.06.2005**
(21) Application number: 03257623.3
(22) Date of filing: 03.12.2003
(51) Int. Cl.: B60C 17/06

(54) **Safe tyre with a supporting apparatus**

(71) Applicant: Nankang Rubber Tire Corporation, Ltd., Taipei City, Taiwan, R.O.C. (TW)
(72) Inventor: Hsieh, Chin-Ming, Chin-Chu Taiwan R.O.C. (TW); Peng, Tien-Cheng, Chin-Chu Taiwan R.O.C. (TW)
(74) Representative: Paget, Hugh Charles Edward

(57) **Abstract**

A supporting apparatus (313) is installed on a safe tyre (30), providing a backup support when this safe tyre (30) has an unexpected pressure loss and hasn't enough ability to support a vehicle. By this supporting apparatus (313) of the present invention, the vehicle can continue being driven for a safe distance.

## Description

### BACKGROUND OF THE INVENTION

This present invention relates to a safe tyre, particularly with a supporting apparatus for providing a backup support when pressure is lost in the safe tyre and it runs flat.

Tyres today are highly reliable and durable ― but they're not invulnerable, they can be damaged by lack of maintenance or accidents, such as running over nails or into holes. Therefore, that means that tyre failures-flat tyres-sometimes happen. Many cars have small "temporary use only" spare tyres. These are designed for limited use, and most importantly, not every driver has the ability to exchange the flat tyres by themselves. Hence, a "safe tyre" with a backup support mechanism is under development. The car, equipped with the safe tyre can be driven on for a safe distance even if the safe tyre is flat and the pressure is at zero.

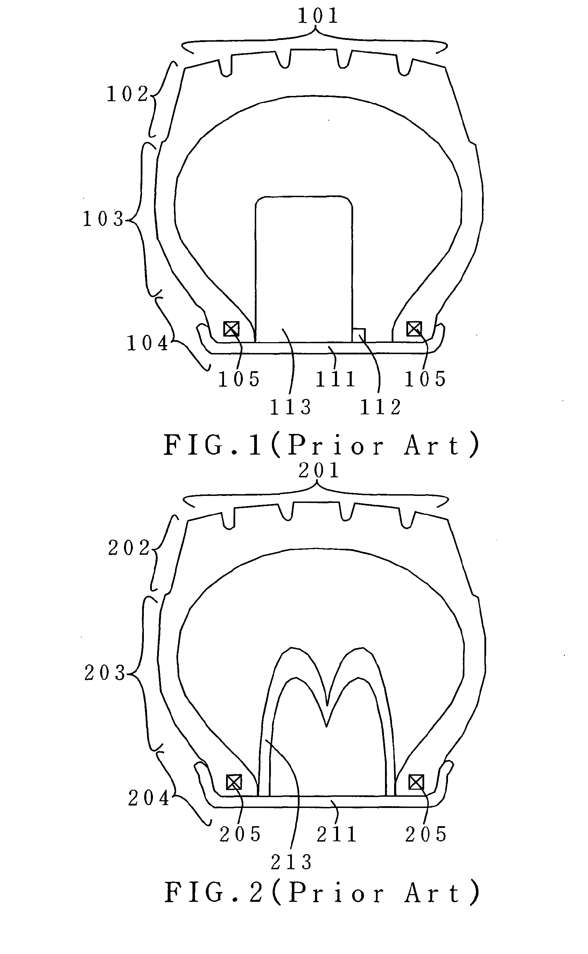

First, a cross-sectional view of a conventional safe tyre system is shown in FIG.1. The safe tyre system is composed of a tyre, a wheel, and a supporting ring 113. The tyre is a symmetrical structure and can be divided into a tread 101, a shoulder 102, a sidewall 103, and a bead 104. The tread 101, running the circumference around the tyre, is the section that makes contact with the road's surface. The shoulder 102 refers to the section starting from the tread 101 edge to the upper part of the sidewall 103. The sidewall 103 refers to the side section of tyre, providing driving comfort through bending and stretching. The bead 104, the bottom part of the tyre, is arranged to hook the tyre onto a rim 111 of the wheel with a wire bead 105 (composed of steel wire and core rubber).

The wheel is designed as a single unit in steel or alloy and formed of the rim 111 and a wheel disk (not shown). The rim 111 is connected with the bead 104 of the tyre, and the wheel disk is connected with a vehicle (not shown). The feature of the safe tyre system is in a supporting ring 113 slid onto the well of the rim 111 of the wheel and fixing the supporting ring 113 with the help of a positioning stop 112 of the rim and the bead 104 of the tyre. The supporting ring 113, a toroidal elastomer, could be formed as a whole or a combination structure of a plurality of elements.

When the tyre suffers from a puncture and leads to a loss of pressure, the sidewall 113 cannot provide a sufficient elasticity to support the tread 101 and the shoulder 102. At this point of time, the supporting ring 113 will take charge in the support of the tread 101 and the vehicle will still be under control and able to travel a safe distance.

As in the above description, the supporting ring 113 can provide backup support when the tyre has an unexpected pressure loss. But the safe tyre system can not be applied to a general rim because it needs other special elements such as the positioning stop 112 and an appropriate seat (not shown) to house the supporting ring 113 in the well of the rim 111, which is immovable. For this reason, the consumer must spend more money to buy the safe tire system with a supporting ring 113 and a peculiar wheel that's necessary.

In the above conventional safe tire system, the supporting ring 113 has to provide a sufficient elasticity to support the tire on an exceptional pressure-losing situation for a safe distance. So the supporting ring 113 is usually made up of a hard rubber and must have an enough thickness to maintain the comfort for driving. The heavy weight of the supporting ring 113 will increase the loading of the wheel in an unexceptional situation. In addition, when the safe tire system has to be replaced or repaired and the tire has to be removed from the rim 111, the supporting ring 113 will be blocked. A special mounting and removing machine can be used to extract the supporting device 113 and then reinsert it back to the well of the rim 111, but unfortunately, not every repair shop will be equipped with the special mounting machine within the "safe distance".

Next, a cross-sectional view of another conventional safe tire is shown in FIG.2. The safe tire comprises a general tire and a general wheel. The tire is a symmetrical structure and can be divided into a tread 201, a shoulder 202, a sidewall 203, and a bead 204. The wheel is designed as a single unit of steel or alloy and formed of a rim 211 and a wheel disk (not shown). The rim 211 is connected with the bead 204 of the tire, and the wheel disk is connected with a vehicle (not shown).

The feature of the safe tire is installed in an m-shaped steel rim 213 slid onto the rim 211 of the wheel and fixed in the m-shaped steel rim 213 with the help of the bead 204 of the tire. When the tire suffers from a puncture, which leads to a loss of pressure, the sidewall 213 cannot provide sufficient elasticity to support the tread 201 and the shoulder 202. At this point in time, the m-shape steel rim 213 will take charge to support the tread 201 and to prevent the bead 204 from separating from the rim 213. So thus enabling the vehicle to travel a safe distance.

As in the above description, the m-shaped steel rim 213 enables the vehicle to travel even in the case of a puncture or insufficient inflation pressure, and the m-shaped steel rim 213 could be utilized in a general tire and a general wheel. But arranging the m-shaped steel rim 213 onto the well of the rim 211 and being jammed by the bead 204 of the tire is a difficult technique. Hence, if the driver has no luck in finding a repair shop with a special mounting machine with a trained technician within the "safe distance", the tire, the wheel and the m-shaped steel rim 213 must be completely changed.

### SUMMARY OF THE INVENTION

The present invention has been made in view of the above problems of the conventional safe tire system. One aim of the invention is to arrange a supporting apparatus on a general tire under the principle of not influencing the normal tire exchange process. The general tire with the supporting apparatus is preferably a safe tire to keep a vehicle under control and rolling to a safe distance in the case of a puncture or of insufficient inflation pressure.

Another aim of the present invention is to arrange a supporting apparatus on a general tire to provide a backup support for a vehicle without the matching of a peculiar wheel, the original wheel of the vehicle is sufficient to assist the supporting apparatus in keeping the vehicle under control and rolling to a safe distance in the case of a puncture or of insufficient inflation pressure.

The other aim of the present invention is to provide a method for forming a safe tire by arranging a supporting device on a rubber bead of the safe tire. The rubber bead is used for fixing the supporting device on the safe tire and helping to provide a auxiliary backup support. A rubber bead may be an annular piece of rubber. It may have a uniform cross-section. It may be moulded separately from the tyre.

As mentioned in the above aims of the present invention, a supporting apparatus may be installed on a safe tire as a backup support when the safe tire has an unexpected loss of pressure and hasn't the ability to support a vehicle. By this supporting apparatus of the present invention, the vehicle could continue to be driven a safe distance.

Additional objects and advantages of this invention will be apparent from the following detailed description of a preferred embodiment thereof that proceeds with reference to the accompanying drawings.

### BRIEF DESCRIPTION OF THE DRAWINGS

FIG. 1 is a cross-sectional view of a conventional safe tire system.
FIG. 2 is a cross-sectional view of a conventional safe tire.
FIG. 3A is a front view of a safe tire.
FIG. 3B is a cross-sectional view of the safe tire.
FIG. 3C is another cross-sectional view of the safe tire.
FIG. 4A is a front view of a single supporting element.
FIG. 4B is a front view of the connection of two adjacent supporting elements.

### DESCRIPTION OF THE PREFERRED EMBODIMENT

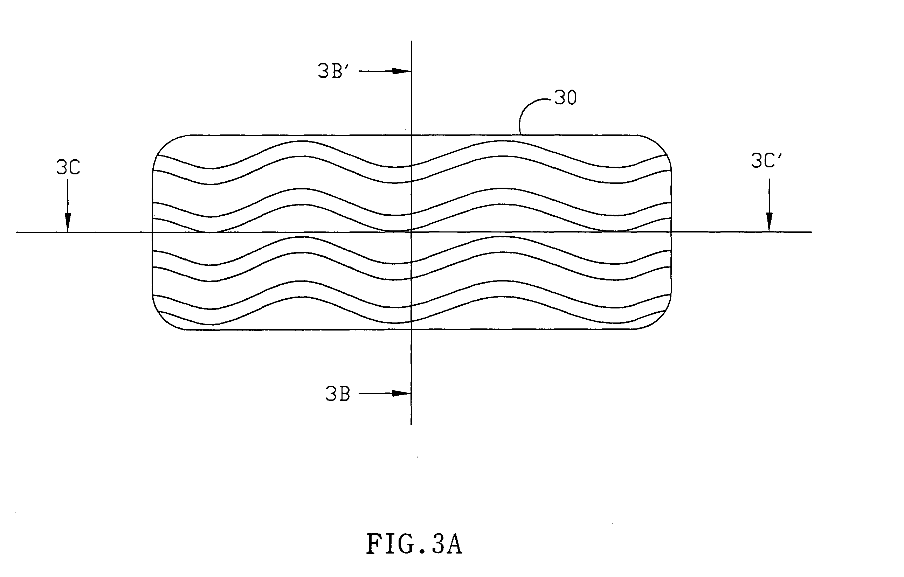

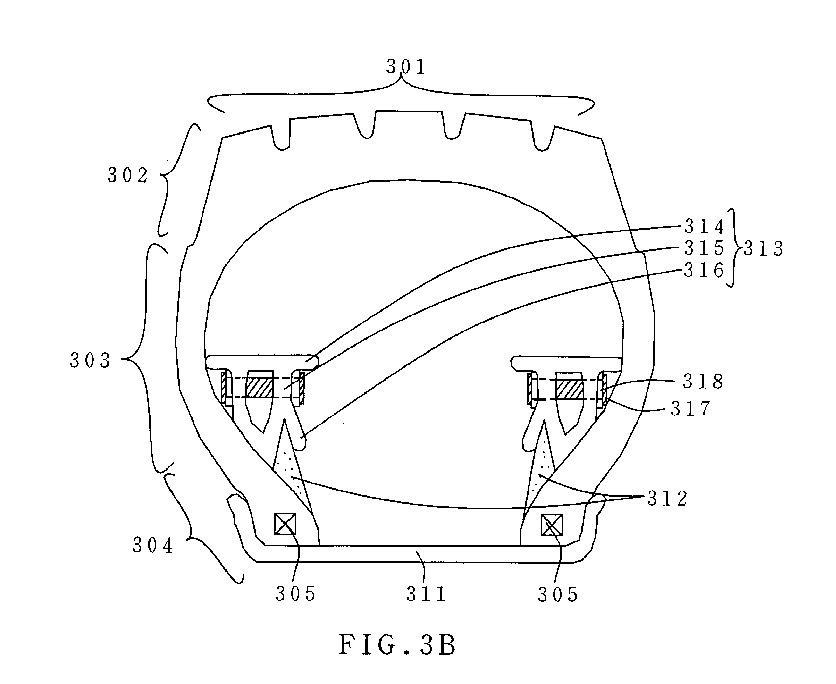

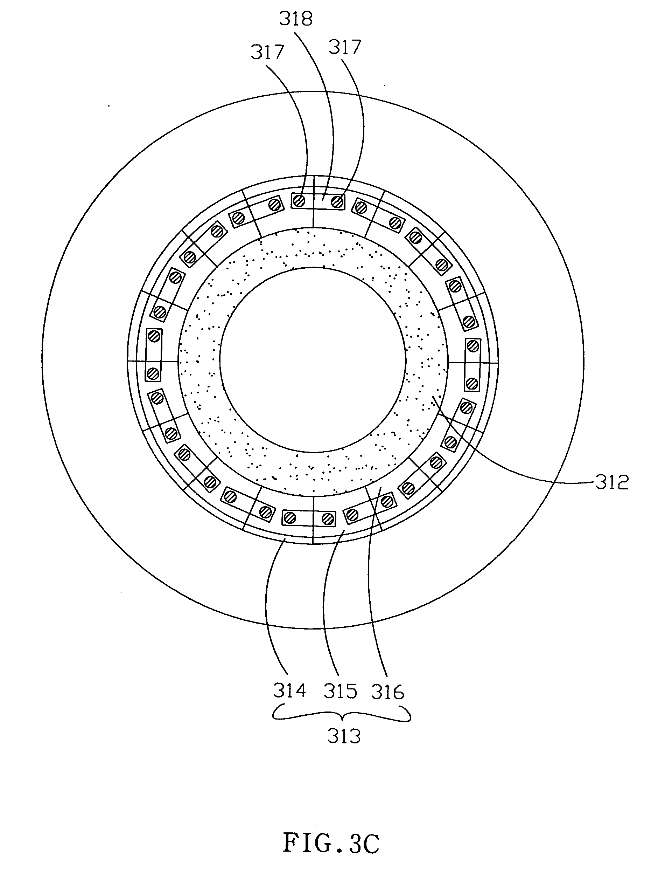

FIG. 3A is a front view of a preferred embodiment of a safe tire 30 according to the present invention. FIG. 3B is a cross-sectional view of the safe tire 30, along with the hatches 3B-3B' of FIG. 3A. FIG. 3C is another cross-sectional view of the safe tire 30, along with the hatches 3C-3C' of FIG. 3A.

Referring to FIG. 3B and FIG. 3C, they are showing two different cross-sectional views of the safe tire 30. First, the safe tire 30 is a symmetrical structure and can be divided into a tread 301, a shoulder 302, a sidewall 303, and a bead 304. The tread 301, running the circumference around the safe tire 30, is the section that makes contact with the road's surface. The shoulder 302 refers to the section staring from the tread 301 edge to the upper part of sidewall 303. The sidewall 303 refers to the side section of the safe tire 30, providing driving comfort through bending and stretching. The bead 304, the bottom part of the safe tire 30, is arranged to hook the safe tire 30 onto a rim 311 of a wheel with a wire bead 305 (composed of steel wire and core rubber). The wheel is designed as a single unit in steel or alloy and formed of the rim 311 and a wheel disk (not shown). The rim 311 is connected with the bead 304 of the safe tire 30, and the wheel disk is connected with a vehicle (not shown).

According to the preferred embodiment of the present invention, a rubber bead 312 is formed in the safe tire 30 with a triangular cross-section. One surface of the rubber bead 312 is pasted with the inner wall of the bead 304, the other two surfaces are intersected by an acute angle to form a circular salient. And a plurality of supporting elements are linked to be a supporting device 313 and chained by the hooked structure of the rubber bead 312. The rubber bead 312 is not only arrange for fixing the supporting device 313 on the safe tire 30, and further, it also provides a auxiliary backup support for the safe tire 30.

In this preferred embodiment of the present invention, the structure of the rubber bead 312 is a circular salient, but other structures which could fix the supporting device 313 on the safe tire 30 such as gear-shaped salient or a plurality of separated salient are also arranged to form the rubber bead 312 of the present invention. And the material of the rubber bead 312 of this preferred embodiment is a hard rubber, but other materials which could make a good connection with the bead 304 and provide a high elasticity could also be the material of the rubber bead 312 of the present invention. In addition, another rubber bead (not shown) could be formed in the safe tire 30 and pasted with the inner wall of the bead 304, matching with the rubber bead 312 and enhancing the combination with the supporting device 313 according the present invention.

The supporting device 313 is composed of a plurality of supporting elements. Referring to FIG. 3B, the cross-sectional structure of each supporting element could be divided into a supporting section 314, a connection section 315 and an indentation section 316. The supporting section 314 is contacted with the inner wall of the tread 301 when the inflation pressure of the safe tire 30 is lost. In this preferred embodiment, the supporting section 314 is a flat surface, but a rough structure such as grooved hollow or a plurality of bulges could also be formed on the surface of the supporting section 314 to increase the friction between the surface of the supporting section 314 and the inner wall of the tread 301 in the safe tire 30. The indentation section 316 of the supporting device 313 is mounted on the salient structure of the rubber bead 312, meanwhile, referring to FIG. 3C, a cross-section view of the safe tire 30 is shown in the connection situation between the indentation section 316 of the supporting device 313 and the rubber bead 312. In the connection section 315, each supporting element is provided with a hollow structure and is run through by a rivet 317 (fixing device). Referring to FIG. 3C, a plurality of supporting elements are linked by a chain and surrounded with the rubber bead 312, and each supporting element is connected by the rivet 317 and a side plate 318 (connection device).

In this preferred embodiment of the present invention, the side plate 318 is used to connect with two adjacent rivets 317 of the connection section 315 of the adjacent supporting elements. But other connecting devices and methods have the ability to fasten the adjacent supporting elements will also be arranged in the present invention. And referring to FIG 3B, the structure of the connection section 315 of the supporting element is arranged with a hollow structure, and in this preferred embodiment, the material of all supporting elements is an aluminum alloy. The above designs are aimed to lower the weight of the supporting device 313 and decrease the loading of the safe tire 30. And other materials such as rubber and transition metal are also could be utilized to make the supporting elements according to the present invention.

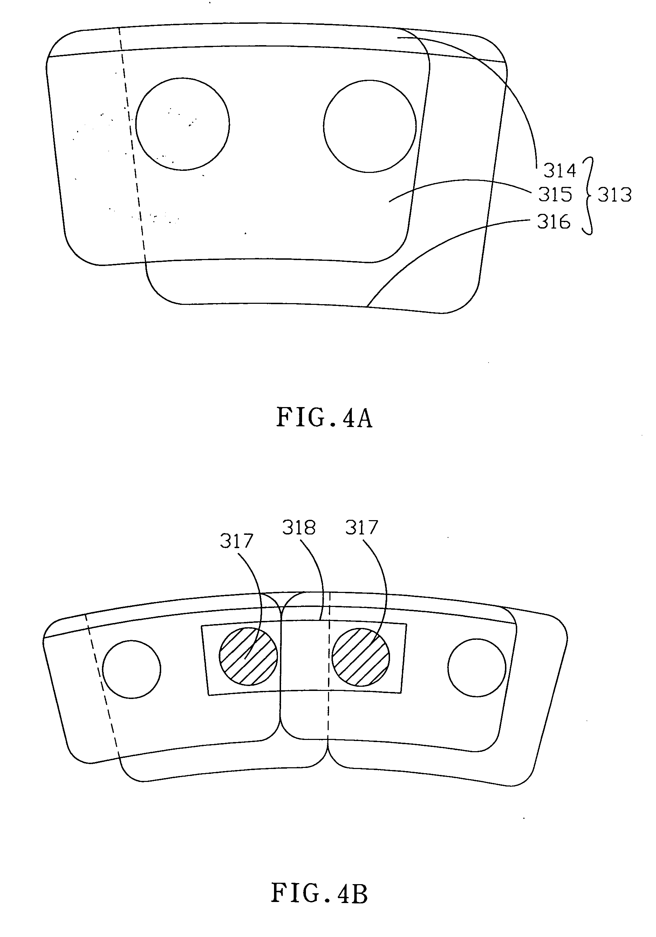

Referring to FIG. 4A, a front view of a single supporting element. The structure of each supporting element of the supporting device 313 could be divided into a supporting section 314, a connection section 315 and an indentation section 316. The connection section 315 is provided with two hollow structures of this preferred embodiment of the present invention. Referring to FIG 4B, a front view of the connection of two adjacent supporting elements. The two hollow structures of the connection section 315 are run through by two rivets 317, and a side plate 318 is used to connect with two adjacent rivets 317 of the connection section 315 of the adjacent supporting elements. Besides, in order to enhance the combination of the adjacent supporting elements of this preferred embodiment, each supporting element is provided with a malposition structure. The plurality of supporting elements will be linked like a caterpillar to form the supporting device 313.

In this preferred embodiment of the present invention, each supporting element is provided with two hollow structures on the connection section 315, but the number of hollow structures of the connection section 315 will not be limited of this preferred embodiment. Providing a single hollow and positing it on the malposition structure will also be used to connect the adjacent supporting elements 315. The number of the plurality of supporting elements is depended on the size and the driving comfort of the safe tire 30.

According to the above description of a preferred embodiment of the present invention, a supporting device 313 is installed on a rubber bead 312 of a safe tire 30, providing a backup support when the safe tire 30 has an unexpected loss of pressure and hasn't enough ability to support a vehicle. By this supporting device 313 of the present invention, the vehicle could continue being driven a safe distance.

Skilled workers will further recognize that many changes may be made to the details of the above-described embodiment of this invention without departing from the underlying principles thereof. Accordingly, it will be appreciated that this invention is also applicable to color synchronization applications other than those found in multimedia projectors. The scope of the present invention should, therefore, be determined only by the following claims.

## Claims

1. A supporting apparatus on a tire, comprising:
a rubber bead, said rubber bead is a circular salient structure which is pasted on an inner wall of the bead of said tire; and
a supporting device, said supporting device surrounding said rubber bead and then fixing on said tire.

2. The supporting apparatus according to claim 1, wherein said rubber bead is a continuous circular salient structure.

3. The supporting apparatus according to claim 2, wherein said continuous circular salient structure is formed by two surfaces of said rubber bead and said two surfaces are intersected by an acute angle.

4. The supporting apparatus according to claim 1, wherein said rubber bead is a gear-shaped circular salient structure.

5. The supporting apparatus according to claim 1, wherein said rubber bead is made of a rubber material.

6. The supporting apparatus according to claim 1, wherein said supporting device comprises an indentation section for making a connection with said circular salient structure of said rubber bead.

7. The supporting apparatus according to claim 1, wherein said supporting device comprises a supporting section, and said supporting section will support the inner wall of said tire when the inflation pressure of said tire is lost.

8. The supporting apparatus according to claim 7, wherein the surface structure of said supporting section is selected from the group consisting of a flat structure, a grooved hollow structure, and a plurality of bulge.

9. The supporting apparatus according to claim 1, wherein said supporting device is a chain structure formed by a plurality of supporting elements.

10. The supporting apparatus according to claim 9, wherein said plurality of supporting elements is provided with a hollow structure and run through by a fixing device, and a connection device is provided to make the connection with said fixing device.

11. The supporting apparatus according to claim 10, wherein said fixing device comprises a rivet.

12. The supporting apparatus according to claim 10, wherein said connection device comprises a side plate.

13. The supporting apparatus according to claim 9, wherein said plurality of supporting elements are provided with a malposition structure and linked to form said supporting device.

14. The supporting apparatus according to claim 1, wherein the material of said supporting device is selected from the group consisting of a rubber material, an aluminum alloy and a transition metal.

15. The supporting apparatus according to claim 1, wherein said supporting device is provided with a hollow structure.

16. A safe tire, comprising:
a tire;
a rubber bead, said rubber bead is a circular salient structure which is pasted on an inner wall of the bead of said tire; and
a supporting device, said supporting device surrounding said rubber bead and then fixing on said tire.

17. The safe tire according to claim 16, wherein said rubber bead is made of a rubber material and said circular salient structure of said rubber bead is selected from the group consisting of a continuous circular salient and a gear-shaped circular salient.

18. The safe tire according to claim 16, wherein said supporting device comprises an indentation section and a supporting section, said indentation section is used to make a connection with said circular salient structure of said rubber bead, said supporting section will support the inner wall of said tire when the inflation pressure of said tire is lost, and the surface structure of said supporting section is selected from the group consisting of a flat structure, a grooved hollow structure, and a plurality of bulges.

19. The safe tire according to claim 16, wherein said supporting device is a chain structure formed by a plurality of supporting elements, and said plurality of supporting elements are provided with a hollow structure and run through by a fixing device, and a connection device is provided to make the connection with said fixing device.

20. The safe tire according to claim 19, wherein said plurality of supporting elements are provided with a malposition structure and linked to form said supporting device, and said supporting device is provided with a hollow structure.
